# EUROPEAN PATENT APPLICATION

(11) **EP 1 341 271 A1**
(43) Date of publication of application: **03.09.2003**
(21) Application number: 02251444.2
(22) Date of filing: 01.03.2002
(51) Int. Cl.: H01S 3/00, H01S 3/02

(54) **Laser apparatus**

(71) Applicant: GSI Lumonics Ltd., Rugby, Warwickshire CV21 1QN (GB)
(72) Inventor: Filgas, David, Newbury Park California 91320 (US)
(74) Representative: Kensett, John Hinton

(57) **Abstract**

Laser apparatus comprising a laser rod mounted in a pumping chamber, and an aperture close to or adjacent an end of the rod for controlling beam quality of a laser beam generated by the apparatus. The aperture may be formed by a laser rod tube.

## Description

### Field of the Invention

This invention relates to laser apparatus. In particular, it relates to an apparatus and a method for allowing simple control of beam quality in a laser resonator.

### Background of the Invention

Essentially, a laser rod, which in a solid state laser is often a Nd:YAG laser rod 1 is mounted in a resonator between two mirrors 2 and 3 in conventional fashion, one of the mirrors being half silvered so that the laser beam can be emitted from that end. Lasing is stimulated by a pumping means, which is usually in the form of pumping lamps of which two are shown, 4 and 5. The apparatus is mounted within a housing which keeps the components in predetermined relationship to each other.

It is common practice in the laser industry to attach a laser rod tube to the end of a laser rod. Such tubes provide a convenient means for handling the rod and fixing it into a pumping chamber assembly of a solid state laser. The laser rod tube must be securely attached to the laser rod. In addition, solid state lasers are typically water-cooled so the joint between the rod tube and the laser rod must also be leak-tight.

Beam quality of a laser beam is determined by the divergence of the beam times the diameter of the beam at a waist position. The lower the numerical value of the beam quality, the better for most applications, although there is generally a trade-off between beam quality and output power.

It is well-known that the worst case beam quality of a laser is inversely proportional to the effective length of the resonator, and proportional to the area of the limiting aperture inside the resonator which is usually the rod diameter. The best beam quality (that is, lowest value) is therefore derived from long resonators with small radius limiting apertures. Although some resonators have single rods as shown, often resonators have a plurality of rods arranged in series. In lasers with single rods, the beam quality can be varied by moving the output coupler 3 and rear mirror 2 further apart or closer together to improve or degrade beam quality. In periodic resonators with more than one rod, this is not possible. In such cases, the pumping chambers would have to move to maintain periodicity and symmetry. This is usually impractical due to water and power connections.

An alternative method of controlling beam quality is to vary the radius, and therefore area, of the limiting aperture in the resonator. In most industrial lasers, as described, the beam quality defining aperture is the rod. The beam quality can then be controlled by using different diameter rods. Small diameter rods can be used for high beam quality and larger diameter rods for poorer beam quality. Typically, improved beam quality is at the expense of lower output power and therefore a balance has to be made.

One limitation of this technique is that to obtain very good beam quality a very small diameter rod is required if the pitch of the resonator is to be limited to practical values. To obtain high power, long rods are required. Long thin rods, however, have poor stiffness and can be flexed easily by coolant flow causing instability in the laser output. Such rods, being very long and very thin can also be easily subject to breakage when mechanically stressed in handling.

A further alternative is to place apertures midway between the rods in a periodic resonator or to place them close to the output coupler or rear mirror. It is known that waists are formed in periodic resonators and by placing an aperture at a waist position, beam quality can be controlled.

One limitation of this particular technique is that the waist diameter and therefore aperture transmission depends on the value of thermal lensing in the laser rods. At low pump power, and therefore low thermal lensing, the diameter of the waist is at its largest and this decreases as pump power increases. This impacts the rise time characteristics when the laser is switched from cold (or lower power) to high power. The apertures have lower transmission until the rods reach thermal equilibrium and thus limiting the rise time of the laser output to of the order of 1 second, for example. Many welding and cutting processes require a laser rise time much faster than this, typically of 1 to 10 ms and this precludes the use of such 'far field' apertures.

A further limitation is that such apertures have to centred with respect to the axis of the laser rods and also have to be cooled. This adds cost and complexity to the laser design.

### Summary of the Invention

According to the present invention there is provided a laser apparatus, comprising a laser resonator including a laser rod, and a laser rod tube fitted to the end of the rod, wherein the tube comprises means for forming an aperture close to or adjacent the end of the rod, for controlling beam quality of a laser beam generated by the apparatus.

In a second aspect, the invention provides a laser rod having a tube connected to end thereof, forming an aperture close to or adjacent said end of the rod, for controlling beam quality of a laser beam generated by the rod when mounted in a pumping chamber.

According to invention in a further aspect there is provided laser apparatus comprising a laser rod mounted in a pumping chamber, and an aperture close to or adjacent an end of the rod for controlling beam quality of a laser beam generated by the apparatus.

The invention further provides a method of controlling beam quality in a laser apparatus comprising a laser rod, said method comprising positioning an aperture close to or adjacent an end of the rod, the aperture being sized to control beam quality.

### Description of the Drawings

Embodiments of the invention will now be described, by way of example only, with reference to the accompanying drawings, in which:
Figure 1 shows schematically a laser resonator;
Figure 2 shows a laser rod with attached laser rod tube;
Figure 3 shows a laser rod with laser rod tube forming an aperture;
Figures 4a to 4c show laser resonators of different characteristics;
Figure 5 shows a plot of power input against beam quality;
Figure 6 shows an alternative embodiment; and
Figure 7 shows a further alternative embodiment.

### Description of the Invention

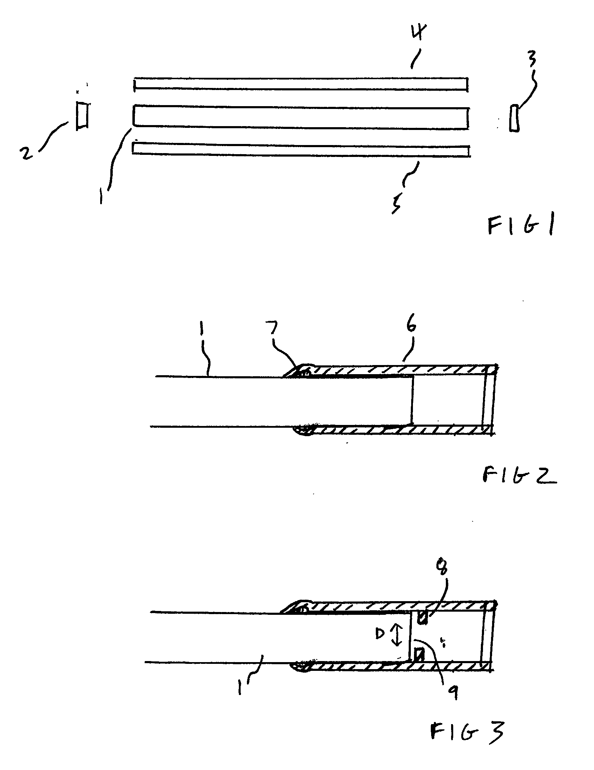

As described, laser rod tubes are often fitted to each end of a laser rod. Figure 2 shows a laser rod tube 6 fitted to a laser rod 1. One or more seals 7, typically of Teflon™ or similar material may be used in affixing the tube to the rod to avoid ingress of cooling water and to create a good seal. The laser rod tube 6 is then used to mount the rod in the pumping chamber and to provide a means of water sealing, as is described in the applicant's co-pending patent application no GB 0130971.1. In embodiments of the present invention, this rod tube is used to provide an aperture for controlling beam quality and which overcomes the problems of prior art devices for controlling beam quality associated with centring, cooling and laser rise time.

Referring to Figure 3, an aperture of diameter significantly smaller than the diameter of the rod aperture 8 is machined into the inner profile of a rod tube. This aperture controls the beam quality of the laser. The aperture may typically be positioned so that, in use, it is positioned about 3 mm from the end 9 of the rod 1 but this may be varied. Usually, the aperture will not be mounted right against the rod but in certain circumstances it could be.

A typical laser rod has an diameter of approximately 6.35 or 6.00 mm. The diameter D of the aperture is selected to have a selected beam quality. For a high beam quality, in one embodiment, the aperture is of diameter 4.83 mm. Thus, the ratio of cross-sectional areas is approximately 36/25.

As is described, the beam quality of a laser beam is determined by the divergence of the beam times the diameter of the beam at a waist position. The diameter of the waist depends upon the thermal lensing of the system and for a given system thermal lensing is determined by pump power. At low pump power, thermal lensing is low and the diameter of the waist is at its largest. As pump power increases, lensing increases and so the waist diameter decreases.

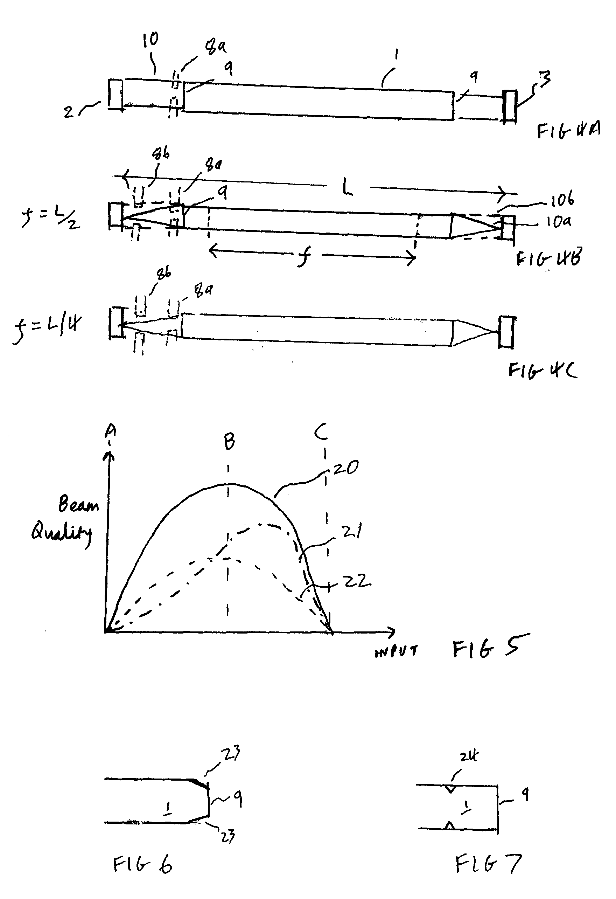

Figure 4a shows low pumping power, where there is accordingly little thermal lensing. The laser energy 10 within the resonator therefore lies within a generally parallel envelope and does not significantly converge or diverge from the line of the rod 9 to the mirrors 2 and 3. It will therefore be apparent that if an aperture 8a (shown in dashed lines) is placed anywhere between the end of the rod 9 and mirror 2 (or mirror 3) then this aperture will limit the diameter of the beam and will therefore directly affect beam quality.

Figure 4b shows the position in which the pumping power has been increased to thereby increase thermal lensing up to the confocal point of the resonator, where the focal length f of the rod is equal to the effective length of the resonator L/2, ie f= L/2. This is known as a confocal resonator. As is described, when the laser is switched from cold (low power) to high power the waist diameter of such a system decreases from the diameter generally shown as 10b in Figure 4b to the diameter shown as 10a in Figure 4b. Thus, an aperture placed at position 8a falls within the envelope of a beam within the resonator both at the turn on stage and subsequently, since it is within both envelopes 10a and 10b and so the aperture controls beam quality from start up. However, if an aperture is placed nearer to a mirror or output coupler than to the end 9 of the rod, as shown at position 8b for example, or alternatively if placed closer to an adjacent resonator n in a multiple resonator set up, then the aperture will affect beam quality at lower powers but at higher powers, as the beam converges, will not affect it since the beam envelope will then lie wholly within the aperture within the area defined by the aperture.

With increased beam power, a situation such as that shown in Figure 4c is shown. In this example, the focal length fis equal to L/4. As such powers, an aperture closer to the end of the rod than to a mirror (or an adjacent rod) is effective at controlling beam quality whereas one nearer to the mirror is not since the beam envelope falls wholly within the aperture and therefore is not affected by it.

In some embodiments, the aperture lies within 0 to 5 mms, typically 3 mm, of the end of the rod. In embodiments of the invention, the aperture may lie closer to the rod than to an adjacent mirror or the end of an adjacent rod.

Figure 5 shows schematically a plot of power input against beam quality. A plot 20 is for a system in which no aperture is provided. Plot 21 is a system where an aperture is provided near the mirror, ie in a position such as 8b in Figures 4b and 4c, and plot 22 is for a position where an aperture is provided near the rod (apertures 8a). The plots show how beam quality varies as the input increases, passing the situation shown in Figures 4a, 4b and 4c at, respectively, positions A, B and C in the figure. The beam quality plot for a non-apertured system is in the format as shown at B of maximum beam quality for a particular input power. Where an aperture is provided near to the mirror (position 8b) then beam quality is initially good. However, it deteriorates as input increases as the effects of the aperture reduce, as described above. With the aperture controlling beam quality, plot 22, the overall plot is again gaussian generally but is lower magnitude (ie better beam quality) than the non-apertured configuration.

Note that a balance will always be required to be achieved between beam quality and between laser output since laser output generally will initially increase with increased input but then begins to decrease.

In alternative embodiments, the aperture may be provided by the rod itself, rather than being provided by a laser rod tube or other external means. Figure 6 shows an embodiment in which the end of a rod is bevelled 23 to create an aperture. It may be otherwise shaped to create a suitable aperture.

Figure 7 shows an alternative version in which a notch or other means is formed in the rod 24 which provides an aperture defining the width of the beam at that point.

In embodiments of the invention, the aperture is automatically centred on the rod axis by mechanical tolerances, particularly if the aperture is formed in the inner profile of the rod tube or otherwise associated with the rod tube and therefore problems of centring are reduced or eliminated. Furthermore, the laser rod is generally water-cooled and the aperture itself is cooled by the water flow cooling the laser rod. In addition, since the aperture is placed close to the end of the laser rod, the transmission of the aperture is insensitive to laser pump power/rod thermal lensing as described and therefore does not limit the laser rise time as an aperture placed closed to a mirror might.

## Claims

1. A laser apparatus, comprising a laser resonator including a laser rod, and a laser rod tube fitted to the end of the rod, wherein the tube comprises means for forming an aperture close to or adjacent the end of the rod, for controlling beam quality of a laser beam generated by the apparatus.

2. Laser apparatus as claimed in Claim 1, wherein the aperture is formed from the inner profile of the laser rod tube.

3. Laser apparatus as claimed in Claim 1 or 2, wherein the aperture is closer to the rod than to a mirror forming part of the laser resonator.

4. Laser apparatus as claimed in Claim 1 or 2, comprising a plurality of laser rods, the aperture being closer to the rod than to an optically adjacent end of a further rod.

5. Laser apparatus as claimed in any preceding claim, wherein the ratio of cross-sectional areas between the rod and aperture is approximately 36/25.

6. Laser apparatus as claimed in any preceding claim, wherein the aperture is provided about 3 mm from the end of the rod.

7. A laser rod having a tube connected to end thereof, the tube being provided with an aperture close to or adjacent said end of the rod, for controlling beam quality of a laser beam generated by the rod when mounted in a pumping chamber.

8. Laser apparatus comprising a laser rod mounted in a pumping chamber, and an aperture close to or adjacent an end of the rod for controlling beam quality of a laser beam generated by the apparatus.

9. Laser apparatus as claimed in Claim 8, wherein the aperture is formed closer to the rod than to a mirror or output coupler.

10. Laser apparatus as claimed in Claim 8 or 9, wherein the aperture is formed by the laser rod.

11. Laser apparatus as claimed in Claim 10, wherein the aperture is formed by shaping an end of the rod.

12. Laser apparatus as claimed in Claim 11, wherein the end of the rod is bevelled.

13. Laser apparatus as claimed in Claim 10, wherein an internal projection is formed in the rod, to form the aperture.

14. A method of controlling beam quality in a laser apparatus comprising a laser rod, said method comprising positioning an aperture close to or adjacent an end of the rod, the aperture being sized to control beam quality.

15. A method as claimed in Claim 14, wherein the aperture is provided by a laser rod tube.

16. A method as claimed in Claim 14 or 15, wherein the aperture is provided closer to the rod than to a mirror or output coupler.
